# EUROPEAN PATENT APPLICATION

(11) **EP 3 043 250 A1**
(43) Date of publication of application: **13.07.2016**
(21) Application number: 14840138.3
(22) Date of filing: 16.07.2014
(51) Int. Cl.: G06F 3/0481, G06F 3/041, G06F 3/048, G06F 3/0488

(54) **INFORMATION PROCESSING DEVICE, INFORMATION PROCESSING METHOD, AND PROGRAM**

(30) Priority: 02.09.2013 JP 2013181226
(71) Applicant: Sony Corporation, Tokyo 108-0075 (JP)
(72) Inventor: MIZUNUMA, Hiroyuki, Tokyo 108-0075 (JP); YAMANO, Ikuo, Tokyo 108-0075 (JP); SAWAI, Kunihito, Tokyo 1080075 (JP); TAKI, Yuhei, Tokyo 108-0075 (JP); NAKAGAWA, Yusuke, Tokyo 108-0075 (JP); YAMAOKA, Keisuke, Tokyo 108-0075 (JP)
(74) Representative: MFG Patentanwälte Meyer-Wildhagen Meggle-Freund Gerhard PartG mbB
(86) International application number: PCT/JP2014/068952
(87) International publication number: WO 2015/029632

(57) **Abstract**

[Object] To provide an information processing apparatus, an information processing method, and a program, each of which is new and improved and is capable of improving the operability for selecting an object image.

[Solution] According to the present disclosure, there is provided an information processing apparatus, including: a determination unit configured to determine whether or not an input operation amount input to an input operation unit has exceeded an operation amount threshold; a control unit configured to set one of a plurality of object images displayed on a display unit as a selection target object image and change the selection target object image if the input operation amount has exceeded the operation amount threshold; and a setting unit configured to set the operation amount threshold to a first value before a first change in the selection target object image is performed and set the operation amount threshold to a second value larger than the first value after the first change in the selection target object image is performed.

## Description

### Technical Field

The present disclosure relates to an information processing apparatus, an information processing method, and a program.

### Background Art

Patent Literature 1 discloses a technology for moving a display target displayed on a display screen with a continuous touch (so-called drag operation).

### Citation List

### Patent Literature

Patent Literature 1: JP H5-119946A

### Summary

### Technical Problem to be Solved

The inventors of the present disclosure have studied operation for selecting an object image. Such a technology has been required to improve operability for selecting an object image. However, the technology of Patent Literature 1 cannot improve the operability for selecting an object image.

In view of this, the present disclosure provides an information processing apparatus, an information processing method, and a program, each of which is new and improved and is capable of improving the operability for selecting an object image.

According to the present disclosure, there is provided an information processing apparatus, including: a determination unit configured to determine whether or not an input operation amount input to an input operation unit has exceeded an operation amount threshold; a control unit configured to set one of a plurality of object images displayed on a display unit as a selection target object image and change the selection target object image if the input operation amount has exceeded the operation amount threshold; and a setting unit configured to set the operation amount threshold to a first value before a first change in the selection target object image is performed and set the operation amount threshold to a second value larger than the first value after the first change in the selection target object image is performed.

According to the present disclosure, there is provided an information processing method, including: determining whether or not an input operation amount input to an input operation unit has exceeded an operation amount threshold; setting one of a plurality of object images displayed on a display unit as a selection target object image and changing the selection target object image if the input operation amount has exceeded the operation amount threshold; and setting the operation amount threshold to a first value before a first change in the selection target object image is performed and setting the operation amount threshold to a second value larger than the first value after the first change in the selection target object image is performed.

According to the present disclosure, there is provided a program for causing a computer to realize: a determination function that determines whether or not an input operation amount input to an input operation unit has exceeded an operation amount threshold; a control function that sets one of a plurality of object images displayed on a display unit as a selection target object image and changes the selection target object image if the input operation amount has exceeded the operation amount threshold; and a setting function that sets the operation amount threshold to a first value before a first change in the selection target object image is performed and sets the operation amount threshold to a second value larger than the first value after the first change in the selection target object image is performed.

According to the present disclosure, an operation amount threshold is set to a first value before a first change in a selection target object image is performed, and the operation amount threshold is set to a second value larger than the first value after the first change in the selection target object image is performed.

### Advantageous Effects of Invention

As described above, the present disclosure can improve operability for selecting an object image. Furthermore effects of a technology according to the present disclosure are not limited to the effect described herein. The technology according to the present disclosure may have any effect described in the present specification or another effect.

### Brief Description of Drawings

[FIG. 1] FIG. 1 is a block diagram showing a configuration of an input operation device according to Embodiment 1 of the present disclosure.
[FIG. 2] FIG. 2 is a hardware configuration diagram of the input operation device according to Embodiment 1.
[FIG. 3] FIG. 3 is a block diagram showing a configuration of an information processing apparatus according to Embodiment 1 of the present disclosure.
[FIG. 4] FIG. 4 is a hardware configuration diagram of the information processing apparatus according to Embodiment 1.
[FIG. 5] FIG. 5 is a flowchart showing processing steps using the information processing apparatus.
[FIG. 6] FIG. 6 is an explanatory view showing a state in which a selection image (focus) is moved.
[FIG. 7] FIG. 7 is an explanatory view showing a state in which a user's finger moves on a touchpad.
[FIG. 8] FIG. 8 is a graph showing how an accumulated value (counter value) of an input operation amount (moving distance of finger on touchpad) is changed with time.
[FIG. 9] FIG. 9 is a flowchart showing a modification example of the processing in Embodiment 1.
[FIG. 10] FIG. 10 is an explanatory view showing a state in which a selection image (cursor) is moved in Embodiment 2.
[FIG. 11] FIG. 11 is a flowchart showing processing steps in Embodiment 2.
[FIG. 12] FIG. 12 is a flowchart showing a modification example of the processing in Embodiment 2.

### Description of Embodiments

Hereinafter, (a) preferred embodiment(s) of the present disclosure will be described in detail with reference to the appended drawings. In this specification and the drawings, elements that have substantially the same function and structure are denoted with the same reference signs, and repeated explanation is omitted.

Furthermore description will be provided in the following order.
1. Study by inventors of present disclosure
2. Embodiment 1
   2-1. Overall configuration
   2-2. Outline of processing
   2-3. Configuration of input operation device
   2-4. Configuration of information processing apparatus
   2-5. Processing steps using information processing apparatus
   2-6. Modification example
      2-6-1. Modification example of processing
      2-6-2. Modification example of configuration
3. Embodiment 2
   3-1. Overall configuration
   3-2. Outline of processing
   3-3. Processing steps using information processing apparatus
   3-4. Modification example
      3-4-1. First modification example
      3-4-2. Second modification example
      3-4-3. Third modification example

### <1. Study by inventors of present disclosure>

The inventors of the present disclosure have studied operation for selecting an object image, thereby arriving at an information processing system according to this embodiment. In view of this, content that the inventors of the present disclosure have studied will be described. Furthermore, in each embodiment described below, a moving distance of a selection image from one object image to an adjacent object image will be also referred to as "one frame".

The inventors of the present disclosure have studied a technology for displaying a plurality of object images (e.g., graphical user interface (GUI) icon) and a selection image used for selecting any of those object images and moving the selection image by user's operation. The user's operation is performed by, for example, swipe operation using a touchpad. In this technology, a user can overlap the selection image displayed on a display screen on a desired object image by performing swipe operation using the touchpad. In this way, the user selects the desired object image.

An application example of such a technology is an example where a program table (made up of a plurality of pieces of programs (object images)) and a selection image are displayed on a display and the selection image is operated on a touchpad of a remote controller.

The inventors of the present disclosure have further studied the above technology and have found that a user cannot overlap a selection image on a desired object image with ease in some cases. Specifically, a user cannot separately perform operation for moving a selection image by only one frame and operation for moving a selection image for a plurality of frames with ease in some cases. For example, if a user attempts to move a selection image by only one frame, the user unintentionally moves the selection image for a plurality of frames.

The inventors of the present disclosure have focused on, as a background (cause) of the above error operation, a gesture identification algorithm used when a selection image is moved.

As the gesture identification algorithm, the inventors of the present disclosure have arrived at an algorithm that "issues a command to move a selection image by one frame if a "moving distance of a finger" exceeds a "distance threshold"". Further, the inventors of the present disclosure have arrived at adjusting the "distance threshold" in this identification algorithm to adjust the moving distance of the finger that is needed to move the selection image by one frame. The inventors of the present disclosure have studied this identification algorithm in more detail, and, as a result, the inventors have found that, even if the distance threshold is adjusted, it is difficult for a user to separately perform operation for moving a selection image by only one frame and operation for moving a selection image for a plurality of frames.

For example, by increasing the "distance threshold", it is possible to reduce the case where a user attempts to move a selection image by one frame but unintentionally moves the selection image by two frames. However, the user needs to largely move his/her finger in order to move the selection image for a plurality of frames.

Furthermore the user take his/her finger off the selection image (or stops his/her finger) when the selection image reaches a desired object image. However, if the moving distance of the finger exceeds the distance threshold after the selection image reaches the desired object image, the selection image is further moved. In the following description, such a phenomenon will be also referred to as "overshoot". If the overshoot occurs, the user performs operation for returning the selection image to the desired object image. However, if the "distance threshold" is large, it is difficult to return the selection image to the desired object image.

On the other hand, by decreasing the "distance threshold", the user can move the selection image for a plurality of frames even if the user does not largely move his/her finger. Therefore, the user can easily move the selection image for the plurality of frames. However, there may be increased the case where a user who desires to move a selection image by only one frame unintentionally moves the selection image by two frames. That is, moving the selection image by only one frame becomes sensitive and becomes difficult. If overshoot occurs, the user performs the operation for returning the selection image to the desired object image. However, in some cases, the overshoot further occurs in the selection image. Therefore, even if the distance threshold is adjusted in the identification algorithm, the user cannot separately perform operation for moving a selection image by only one frame and operation for moving a selection image for a plurality of frames with ease.

On the contrary, Patent Literature 1 described above does not mention separation of operation for moving a selection image by only one frame from operation for moving a selection image for a plurality of frames.

In view of the above circumstances, the inventors of the present disclosure have diligently studied a technology for comfortably performing both operation for moving a selection image by only one frame and operation for moving a selection image for a plurality of frames. As a result, the inventors of the present disclosure have arrived at an information processing system in each embodiment described below. In the following description, each embodiment of the present disclosure will be described.

### <2. Embodiment 1>

### (2-1. Overall configuration)

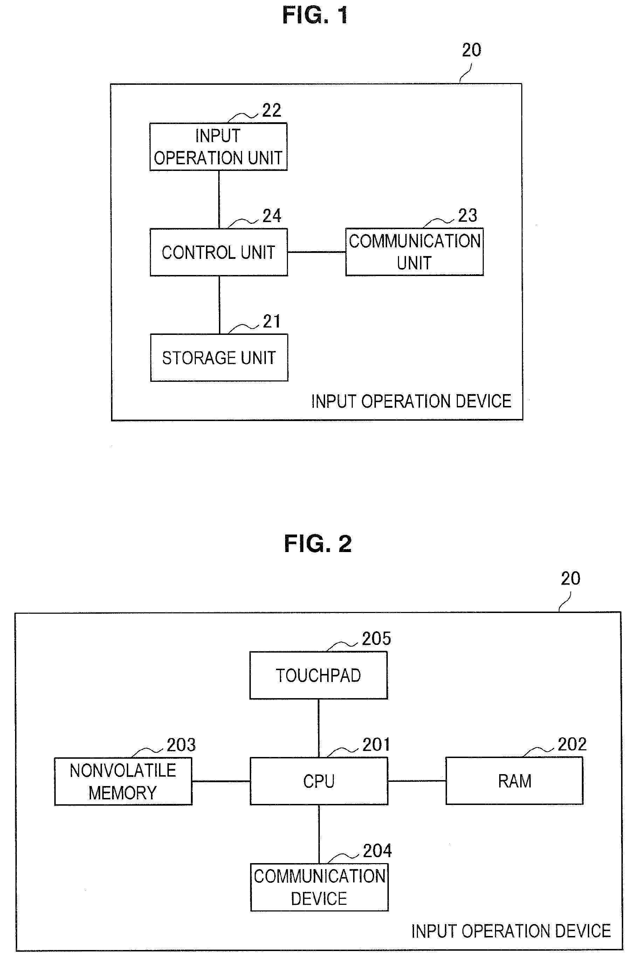

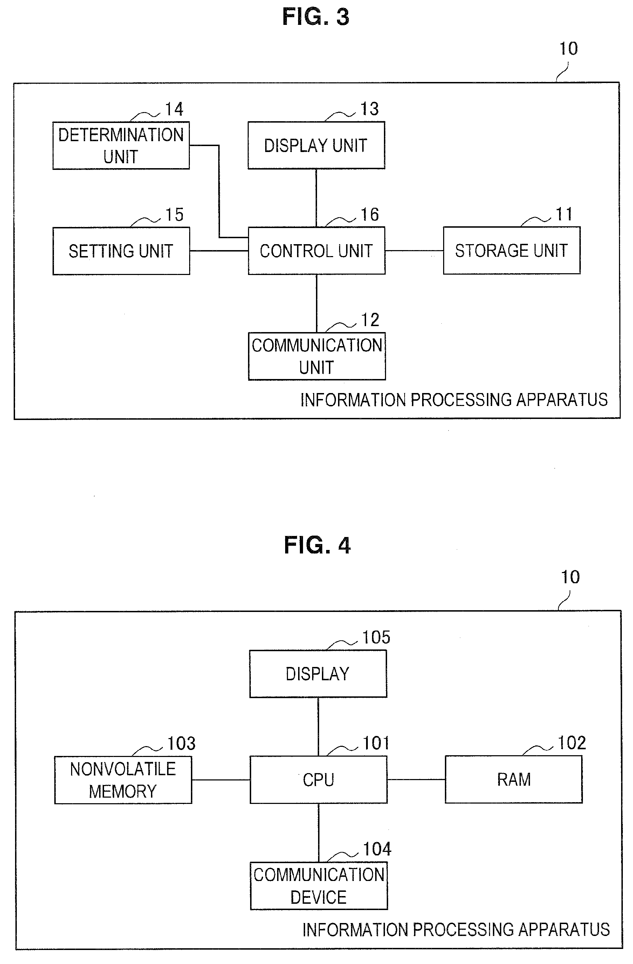

An overall configuration of Embodiment 1 will be described. In Embodiment 1, an information processing system includes an information processing apparatus 10 shown in FIG. 3 and an input operation device 20 shown in FIG. 1. The information processing apparatus 10 includes a display unit 13 and a control unit 16. The display unit 13 displays object images and a selection image and moves the selection image on the basis of user's operation. The control unit 16 controls operation of the display unit 13. The input operation device 20 includes an input operation unit 22. The input operation unit 22 includes a touchpad 205. A user performs input operation (user's operation) with the use of the input operation unit 22 (i.e., touchpad 205) provided in the input operation device 20.

As described above, the information processing apparatus 10 performs display and display control of a selection image and object images, and the input operation device 20 receives input operation from a user. Therefore, in Embodiment 1, display and display control of a selection image and object images and processing for receiving input operation from a user are performed by different devices. The information processing apparatus 10 is, for example, a display device on which a display is mounted, and the input operation device 20 is, for example, a remote controller on which a touchpad is mounted. As a matter of course, this embodiment is not limited to this example. Another specific example of each device will be described below.

### (2-2. Outline of processing)

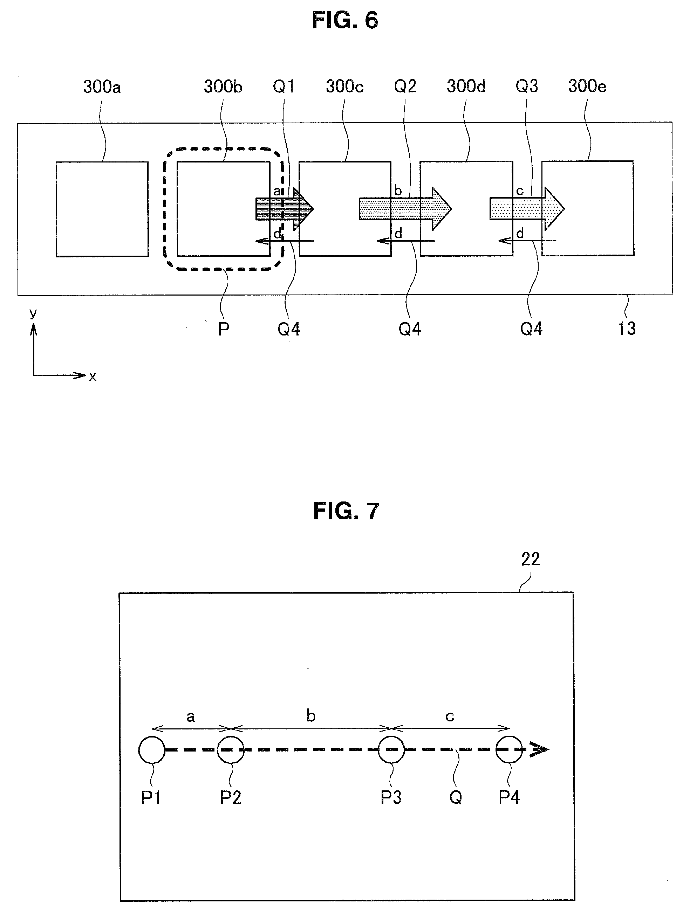

Outline of processing in Embodiment 1 will be described. In Embodiment 1, the information processing apparatus 10 displays a plurality of object images in a line and overlaps a selection image on any of object images. FIG. 6 shows a display example. In FIG. 6, object images 300a to 300e and a selection image P are displayed. In the display unit 13, an x axis and a y axis are set and the object images 300a to 300e are arranged in an x-axis direction. The selection image P overlaps the object 300b. Furthermore the object images may be arranged in a y-axis direction. Further, the object images may be arranged two-dimensionally (e.g., in matrix). Processing performed when the object images are arranged in the two-dimensional shape will be described in Embodiment 2.

A user performs input operation with the use of the input operation device 20. FIG. 7 shows an example of the input operation. In this example, the user touches a point P1 by his/her finger and then moves the point P1 in an arrow Q direction (direction corresponding to a positive direction in the x axis in FIG. 6). That is, the user performs swipe operation in the arrow Q direction. The input operation unit 22 detects an input operation direction (moving direction of finger) and an input operation amount (moving distance of finger) and generates input operation information on the input operation direction and the input operation amount. Herein, the input operation unit 22 generates the input operation information at each predetermined time while the user continues the swipe operation. The input operation amount indicated by the input operation information indicates an input operation amount from an input operation amount obtained at the time of generation of previous input operation information. The input operation device 20 transmits the input operation information to the information processing apparatus 10.

If the input operation information is acquired, the information processing apparatus 10 sets an operation amount threshold. Specifically, if first move of the selection image has not been performed, the information processing apparatus 10 sets the operation amount threshold to a first value a. Herein, the moving times of the selection image means the number of times the selection image moves after the user touches the input operation unit 22.

If the first move of the selection image has been performed but second move thereof has not been performed, the information processing apparatus 10 sets the operation amount threshold to a second value b larger than the first value a. After the second move of the selection image is performed, the information processing apparatus 10 sets the operation amount threshold to a third value c smaller than the second value b. A magnitude relation between the third value c and the first value a is set on the basis of, for example, size of the object images.

If the finger of the user moves in a direction opposite to a previous moving direction, the information processing apparatus 10 sets the operation amount threshold to a fourth value d smaller than the second value b. The fourth value d may correspond to the first value a.

The information processing apparatus 10 accumulates the input operation amount on the basis of the input operation information. Herein, the information processing apparatus 10 prepares a counter for the positive direction of the x axis and a counter for a negative direction thereof and accumulates a value of the counter corresponding to the input operation direction in accordance with a value corresponding to the input operation amount. In this way, the information processing apparatus 10 calculates an accumulated value of the input operation amount.

Then, the information processing apparatus 10 compares the accumulated value of the input operation amount with the operation amount threshold. If the accumulated value of the input operation amount exceeds the operation amount threshold, the information processing apparatus 10 moves the selection image in a direction corresponding to the input operation direction and resets the accumulated value. The information processing apparatus 10 moves the selection image by repeating the above processing.

Therefore, as shown in FIG. 7, if the user moves his/her finger to a point P4 from the point P1 via points P2 and P3, the information processing apparatus 10 moves the selection image P shown in FIG. 6 as follows. Herein, a distance between the point P1 and the point P2 corresponds to the first value a, a distance between the point P2 and the point P3 corresponds to the second value b, and a distance between the point P3 and the point P4 corresponds to the third value c.

That is, if the user touches the point P1 by his/her finger, the information processing apparatus 10 sets the operation amount threshold to the first value a. If the finger of the user exceeds the point P2 (accumulated value > a), the information processing apparatus 10 moves the selection image P by one frame in an arrow Q1 direction and overlaps the selection image P on the object image 300c. Further, the information processing apparatus 10 resets the accumulated value and sets the operation amount threshold to the second value b.

If the finger of the user exceeds the point P3 (accumulated value > b), the information processing apparatus 10 moves the selection image P by one frame in an arrow Q2 direction and overlaps the selection image P on the object image 300d. Further, the information processing apparatus 10 resets the accumulated value and sets the operation amount threshold to the third value c.

If the finger of the user exceeds the point P4 (accumulated value > c), the information processing apparatus 10 moves the selection image P by one frame in an arrow Q3 direction and overlaps the selection image P on the object image 300e. Further, the information processing apparatus 10 resets the accumulated value. The information processing apparatus 10 maintains the operation amount threshold to the third value c.

Furthermore, if the selection image P overlaps any of the object images 300c, 300d, and 300e and the user moves his/her finger in a direction opposite to the arrow Q direction, the information processing apparatus 10 sets the operation amount threshold to the fourth value d. Then, if the moving distance of the finger of the user exceeds the fourth value d, the information processing apparatus 10 moves the selection image by one frame in an arrow Q4 direction. Furthermore a length of each of the arrows Q1 to Q4 corresponds to a value of the operation amount threshold which is needed to move the selection image in a direction of corresponding one of the arrows Q1 to Q4.

Therefore, in order to move the selection image by only one frame, the user only needs to move his/her finger so that the moving distance is larger than the first value a. After the selection image is moved by one frame, the operation amount threshold is set to the second value b larger than the first value a. This reduces a possibility that a user unintentionally moves the selection image by two frames.

Further, after the selection image is moved by two frames, the operation amount threshold is set to the third value c smaller than the second value b. Therefore, the user can move the selection image for a plurality of frames only by moving the finger so that the moving distance is smaller than the second value b (i.e., at a speed according to the user's sense). Therefore, the user can comfortably move the selection image for the plurality of frames. In this way, the information processing apparatus 10 can comfortably perform both operation for moving a selection image by only one frame and operation for moving a selection image for a plurality of frames. That is, the information processing apparatus 10 can improve operability of the selection image.

Further, because the operation amount threshold is set to the fourth value d smaller than the second value b if the finger of the user moves in the direction opposite to the previous moving direction, the user can return the selection image by one frame only by moving his/her finger so that the moving distance is smaller than the second value b. Therefore, the user can easily return the selection image to a desired position also when overshoot occurs.

### (2-3. Configuration of input operation device)

A configuration of the input operation device 20 will be described with reference to FIG. 1 and FIG. 2. The input operation device 20 includes a storage unit 21, the input operation unit 22, a communication unit 23, and a control unit 24. The input operation device 20 is, for example, a remote controller on which a touchpad is mounted or an external touchpad device.

The storage unit 21 stores, for example, a program for causing the input operation device 20 to realize the storage unit 21, the input operation unit 22, the communication unit 23, and the control unit 24. The input operation unit 22 is a so-called touchpad and receives input operation (e.g., swipe operation) from a user. The input operation unit 22 detects an input operation direction and an input operation amount and generates input operation information on the input operation direction and the input operation amount. In this example, because the input operation unit 22 is a touchpad, the input operation direction is a moving direction of a finger and the input operation amount is a moving distance (moving amount) of the finger. Furthermore, if the user stops his/her finger while the finger is touching the input operation unit 22, the input operation unit 22 generates input operation information indicating that the input operation amount is zero. Further, if the user takes his/her finger off the input operation unit 22, the input operation unit 22 generates input operation information indicating that the input operation has been terminated.

The input operation unit 22 outputs the input operation information to the control unit 24. The input operation unit 22 generates the input operation information at each predetermined time while the user continues input operation and outputs the input operation information to the control unit 24. The input operation amount indicated by the input operation information indicates an input operation amount from an input operation amount obtained at the time of generation of previous input operation information.

Herein, the input operation device 20 is not limited to a device on which a touchpad is mounted. That is, the input operation device 20 may be any device as long as some input operation amount and some input operation direction (two or more directions are preferable) can be input.

For example, the input operation device 20 may be a mouse, a wheel, a dial, an input operation device including a sensor that detects a motion of the input operation device, or an input operation device including a sensor that detects gestures (e.g., inclination and motion of body) performed by a user in a space.

If the input operation device 20 is a mouse, the input operation direction is a moving direction of the mouse, and the input operation amount is a moving distance of the mouse. Furthermore examples of the mouse encompass an optical finger navigation (OFN) mouse. If the input operation device 20 is a wheel or a dial, the input operation direction is a rotation direction of the wheel or the dial, and the input operation amount is a rotation distance of the wheel or the dial.

If the input operation device is an input operation device including a sensor that detects a motion of the input operation device, the input operation direction is a moving direction of the input operation device, and the input operation amount is a moving distance of the input operation device. If the input operation device is an input operation device including a sensor that detects gestures performed by a user in a space, the input operation direction is a moving direction of, for example, a certain part (e.g., arm) of the user, and the input operation amount is a moving distance of the part.

The communication unit 23 communicates with the information processing apparatus 10 and outputs information obtained by this communication to the control unit 24. The control unit 24 controls the entire input operation device 20 and outputs input operation information to the communication unit 23. The communication unit 23 transmits the input operation information to the information processing apparatus 10.

The input operation device 20 has hardware configurations shown in FIG. 2, and those hardware configurations realize the storage unit 21, the input operation unit 22, the communication unit 23, and the control unit 24.

That is, the input operation device 20 includes, as the hardware configurations, a CPU 201, a RAM 202, a nonvolatile memory 203, a communication device 204, and the touchpad 205. The CPU 201 reads out a program stored in the nonvolatile memory 203 and executes the program. The program is, for example, the program for causing the input operation device 20 to realize the storage unit 21, the input operation unit 22, the communication unit 23, and the control unit 24.

Therefore, the storage unit 21, the input operation unit 22, the communication unit 23, and the control unit 24 are realized by the CPU 201 reading out the program stored in the nonvolatile memory 203 and executing the program. That is, the CPU 201 can be a substantial operation subject of the input operation device 20.

The RAM 202 is a working area of the CPU 201. The nonvolatile memory 203 stores the above program and the like. The communication device 204 communicates with the information processing apparatus 10. The touchpad 205 receives input operation such as swipe operation from a user.

### (2-4. Configuration of information processing apparatus)

A configuration of the information processing apparatus 10 will be described with reference to FIG. 3 and FIG. 4. As shown in FIG. 3, the information processing apparatus 10 includes a storage unit 11, a communication unit 12, the display unit 13, a determination unit 14, a setting unit 15, and the control unit 16. Examples of the information processing apparatus 10 encompasses a display device, a personal computer provided with a display, and a game console provided therewith (input operation device is externally provided).

The storage unit 11 stores a program for causing the information processing apparatus 10 to realize the storage unit 11, the communication unit 12, the display unit 13, the determination unit 14, the setting unit 15, and the control unit 16 and various kinds of image information (e.g., object images, selection image, and the like).

The communication unit 12 communicates with the input operation device 20 and outputs information obtained by the above communication to the control unit 16. The display unit 13 displays various kinds of images such as object images and a selection image. Herein, as shown in FIG. 6, an xy plane surface is set in the display unit 13. A horizontal direction in FIG. 6 is the x-axis direction and a vertical direction therein is the y-axis direction.

Based on input operation information, the determination unit 14 determines whether or not an accumulated value of an input operation amount has exceeded an operation amount threshold. Specifically, if object images are arranged in the x-axis direction, the determination unit 14 prepares a +x operation amount counter (+x distance counter) corresponding to a positive direction of the x axis and a - x operation amount counter (-x distance counter) corresponding to a negative direction of the x axis. Those counters are formed in, for example, a RAM 102. An initial value of each counter is 0. Furthermore, if object images are arranged in the y-axis direction, the determination unit 14 prepares a +y operation amount counter corresponding to a positive direction of the y axis and a -y operation amount counter corresponding to a negative direction of the y axis. In the following description, processing performed if object images are arranged in the x-axis direction will be described. Also if object images are arranged in the y-axis direction, similar processing is performed.

The determination unit 14 determines whether the input operation direction corresponds to the positive direction or the negative direction of the x axis. Herein, the input operation direction does not necessarily need to be a straight direction. For example, the determination unit 14 may determine that an input operation direction which is a clockwise direction in FIG. 7 corresponds to the positive direction of the x axis and may determine that an input operation direction which is a counterclockwise direction therein corresponds to the negative direction of the x axis.

If the determination unit 14 determines that the input operation direction corresponds to the positive direction of the x axis, the determination unit 14 accumulates a count value corresponding to the input operation amount to a +x operation amount count value (value of +x operation amount counter). If the determination unit 14 determines that the input operation direction corresponds to the negative direction of the x axis, the determination unit 14 accumulates a count value corresponding to the input operation amount to a -x operation amount count value (value of -x operation amount counter). In this way, the determination unit 14 calculates the accumulated value of the input operation amount.

Then, the determination unit 14 determines whether or not the operation amount count value corresponding to the input operation direction, i.e., an accumulated value of the input operation amount has exceeded the operation amount threshold. The determination unit 14 outputs determination result information on a determination result to the control unit 16. If the determination unit 14 determines that the operation amount count value corresponding to the input operation direction has exceeded the operation amount threshold, the operation amount count value is reset. If the input operation direction is inverted, the determination unit 14 rests an operation amount count value corresponding to a direction before inversion.

If a user takes his/her finger off the input operation unit 22, the determination unit 14 resets all operation amount count values. Herein, if the input operation device 20 is a device (e.g., mouse) including an input operation unit other than a touchpad, the determination unit 14 only needs to reset all operation amount count values at a timing at which input operation is terminated (e.g., a timing at which the mouse is stopped).

Based on the moving times of the selection image, the input operation information, and the like, the setting unit 15 sets the operation amount threshold (in this example, so-called distance threshold).

Herein, the moving times of the selection image means the number of times the selection image moves after the user touches the input operation unit 22. The moving times of the selection image is counted by, for example, the following method. That is, the control unit 16 prepares a moving times counter. A value of the moving times counter, i.e., a moving times count value indicates the moving times of the selection image. An initial value is 0. Then, the control unit 16 increases the value of the moving times counter by one every time when the selection image is moved. The control unit 16 resets the moving times counter when the user takes his/her finger off the input operation unit 22.

Herein, if the input operation device 20 is a device (e.g., mouse) including an input operation unit other than a touchpad, the control unit 16 only needs to reset the moving times counter at a timing at which input operation is terminated (e.g., a timing at which the mouse is stopped).

Specifically, if the moving times count value is 0, i.e., the first move of the selection image has not been performed, the setting unit 15 sets the operation amount threshold to the first value a. Based on the input operation information, the setting unit 15 determines whether or not the user has stopped his/her finger for a certain time period and has started to move the finger. If the user has stopped his/her finger for a certain time period and has started to move the finger, the setting unit 15 sets the operation amount threshold to the first value a.

If the moving times count value is 1, i.e., the first move of the selection image has been performed but the second move thereof has not been performed, the setting unit 15 sets the operation amount threshold to the second value b larger than the first value a.

If the moving times count value is two or more, i.e., after the second move of the selection image is performed, the setting unit 15 sets the operation amount threshold to the third value c smaller than the second value b. The third value c may be set to a value between the first value a and the second value b. Alternatively, the magnitude relation between the third value c and the first value a may be set on the basis of, for example, the size of the object images.

For example, if the object images are small, the total number of object images on the display unit 13 is increased. Therefore, in many cases, it is preferable for a user to move the selection image largely (i.e., for a plurality of frames) with a smaller operation amount. In view of this, the setting unit 15 relatively reduces the third value c (a > c). With this, the user can easily move the selection image for a plurality of frames.

On the other hand, if the object images are large, the total number of object images on the display unit 13 is decreased. Therefore, in many cases, it is preferable for a user to prioritize reduction in overshoot over large move of the selection image with a smaller operation amount. In view of this, the setting unit 15 relatively increases the third value c (a < c). Therefore, the user cannot easily move the selection image for a plurality of frames as compared with the above case, but overshoot is reduced.

Based on the input operation information, the setting unit 15 determines whether or not the input operation direction has been inverted. If the input operation direction has been inverted, i.e., the finger of the user moves in a direction opposite to a previous moving direction, the setting unit 15 sets the operation amount threshold to the fourth value d smaller than the second value b. The fourth value d may correspond to the first value a. In a flowchart described below, the fourth value d corresponds to the first value a.

A ratio of the first value a, the second value b, and the third value c is not particularly limited, and may be, for example, approximately a:b:c = 0.5:1.5:1.0. If the object images are large, the ratio may be a:b:c = 1:3:2. If the object images are small, the ratio may be approximately a:b:c = 1:3:0.5. That is, a:b may be constant regardless of the size of the object images. This is because it is estimated that, both in the case of large object images and in the case of small object images, the user moves the selection image by only one frame in many cases. That is, because it is necessary to reduce a possibility that the user unintentionally moves the selection image by two frames, the second value b is maintained to be larger than the first value a. Furthermore the first value a and the second value b may be adjusted on the basis of the object images in a state in which the magnitude relation among the first value a, the second value b, and the third value c is maintained.

The setting unit 15 may set the operation amount threshold on the basis of other parameters such as size and a shape of the input operation unit 22, the number of object images displayed on the display unit 13, a length of a page including the plurality of object images, size of the display unit 13, and the like.

For example, the setting unit 15 may set the operation amount threshold, for example, the third value c to a larger value as the input operation unit 22 is increased (i.e., an operation surface is large). That is, the input operation amount of the user tends to increase as the input operation unit 22 increases, and therefore the operation amount threshold increases in accordance with this increase. This reduces a possibility that overshoot occurs. Further, the setting unit 15 may reduce the operation amount threshold, for example, the third value c as the number of object images is increased. Furthermore, the setting unit 15 may reduce the operation amount threshold, for example, the third value c as the page becomes longer. That is, continuous move of the selection image can be easily performed by reducing the operation amount threshold as the number of object images displayed on the display unit 13 increases.

The setting unit 15 may set the operation amount threshold on the basis of a contact area of the finger. For example, if the contact area of the finger is reduced, the setting unit 15 may set the operation amount threshold to the first value a. In this case, the input operation information contains the contact are of the finger. The reason why the setting unit 15 performs such a processing is as follows. That is, in the case of operation for taking the finger off the input operation unit while sweeping the input operation unit with the finger such as flick operation, the selection image may be moved even after the user takes his/her finger off the input operation unit, i.e., feedback delayed from user's operation may occur.

A cause of occurrence of this delayed feedback is, for example, processing delay caused by the information processing apparatus 10 and the input operation device 20. More specifically, the cause is delay of sampling of the input operation information, various kinds of calculation processing, delineation, and the like in the information processing apparatus 10. In view of this, if the contact area of the finger is reduced, the setting unit 15 predicts that the user takes his/her finger off the input operation unit (i.e., input operation will be terminated) and reduces the operation amount threshold (e.g., sets the operation amount threshold to the first value a). With this, occurrence of the delayed feedback is reduced. That is, if the user takes his/her finger off the input operation unit 22, the selection image is quickly stopped. This makes it possible to reduce delay of feedback felt by the user.

The control unit 16 controls the entire information processing apparatus 10. For example, the control unit 16 displays the object images and the selection image on the display unit 13. If the operation amount count value exceeds the operation amount threshold, the control unit 16 moves the selection image. Further, the control unit 16 performs, for example, adjustment of the value of the moving times counter. That is, if any of the plurality of object images is set as a selection target object image and the input operation amount exceeds the operation amount threshold, the control unit 16 changes the selection target object image. More specifically, the control unit 16 sets the object image as the selection target object image by overlapping the selection image on the object image and displaying the overlapped image. Then, the control unit 16 changes the selection target object image by moving the selection image. As described above, the selection target object image is displayed by overlapping the selection image on the selection target object image in this embodiment. However, a manner of display of the selection target object image is not limited to this example. That is, the selection target object image only needs to be displayed in a manner different from a manner of other object images, and the manner of display thereof is not limited. Another manner of display of the selection target object image is, for example, enlarged (or reduced) display of the selection target object image or vibration and rotation (or vibration or rotation) of the selection target object image.

The information processing apparatus 10 has hardware configurations shown in FIG. 4, and those hardware configurations realize the storage unit 11, the communication unit 12, the display unit 13, the determination unit 14, the setting unit 15, and the control unit 16.

That is, the input operation device 20 includes, as the hardware configurations, a CPU 101, a RAM 102, a nonvolatile memory 103, a communication device 104, and a display 105. The CPU 101 reads out a program stored in the nonvolatile memory 103 and executes the program. The program is, for example, the program for causing the information processing apparatus 10 to realize the storage unit 11, the communication unit 12, the display unit 13, the determination unit 14, the setting unit 15, and the control unit 16.

Therefore, the storage unit 11, the communication unit 12, the display unit 13, the determination unit 14, the setting unit 15, and the control unit 16 are realized by the CPU 101 reading out the program stored in the nonvolatile memory 103 and executing the program. That is, the CPU 101 can be a substantial operation subject of the information processing apparatus 10.

The RAM 102 is a working area of the CPU 101. The nonvolatile memory 103 stores the above program and the like. The communication device 104 communicates with the input operation device 20. The display 105 displays various images such as the object images and the selection image.

### (2-5. Processing steps using information processing apparatus)

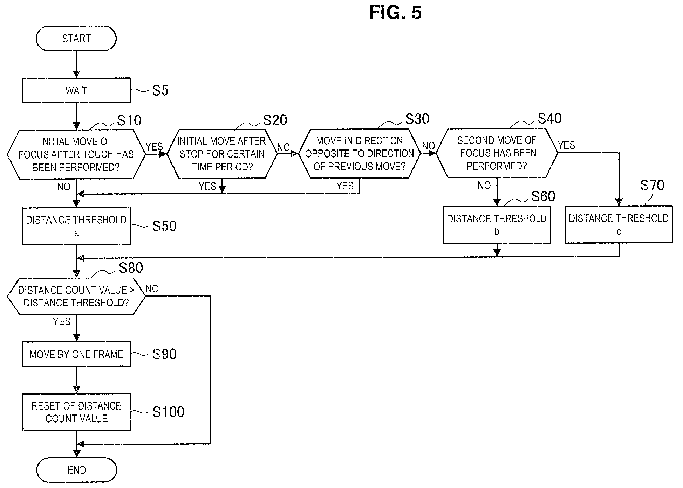

Processing steps using the information processing apparatus (information processing system) will be described with reference to a flowchart shown in FIG. 5. Furthermore, herein, an example where the object images are arranged and are displayed in the x-axis direction will be described. That is, as a presupposition for performing this processing, the control unit 16 displays the object images on the display unit 13 in the x-axis direction and overlaps the selection image on any of the object images. The control unit 16 prepares the moving times counter. The determination unit 14 prepares the +x operation amount counter and the -x operation amount counter. Those counters are formed in, for example, the RAM 102. An initial value of each counter is 0. As a matter of course, the object images may be arranged and be displayed in the y-axis direction.

In Step S5, the information processing apparatus 10 waits until the information processing apparatus 10 receives input operation information. On the other hand, a user performs input operation with the use of the input operation unit 22 of the input operation device 20. In response to this, the input operation unit 22 generates input operation information and outputs the input operation information to the control unit 24. The control unit 24 outputs the input operation information to the communication unit 23, and the communication unit 23 transmits the input operation information to the information processing apparatus 10.

The communication unit 12 of the information processing apparatus 10 receives the input operation information and outputs the input operation information to the control unit 16. Based on the input operation information, the control unit 16 determines whether or not the user continues input operation (i.e., whether or not the user touches the input operation unit 22 by his/her finger). If the control unit 16 determines that the user continues the input operation, the processing proceeds to Step S10. If the control unit 16 determines that the user has terminated the input operation, the control unit 16 resets all count values, and this processing is terminated.

In Step S10, the control unit 16 outputs the input operation information to the determination unit 14 and the setting unit 15.

The setting unit 15 determines whether or not the value of the moving times counter is 0, i.e., determines whether or not the first move (initial move) of the selection image has been performed since the user touched the input operation unit 22. If the setting unit 15 determines that the value of the moving times counter is 0, i.e., determines that the first move (initial move) of the selection image has not been performed, the processing proceeds to Step S50. If the setting unit 15 determines that the value of the moving times counter is larger than 0, i.e., determines that the first move (initial move) of the selection image has been performed, the processing proceeds to Step S20.

Based on the input operation information, the setting unit 15 determines whether or not the user has stopped his/her finger for a certain time period and has started to move the finger in Step S20. If the setting unit 15 determines that the user has stopped his/her finger for a certain time period and has started to move the finger, the processing proceeds to Step S50. In the other cases, the processing proceeds to Step S30.

Based on the input operation information, the setting unit 15 determines whether or not the input operation direction has been inverted in Step S30. That is, the setting unit 15 determines whether or not a previous input operation direction and a current input operation direction are different. If the setting unit 15 determines that the input operation direction has been inverted, the setting unit 15 resets the moving times counter and the processing proceeds to Step S50. In other cases, the processing proceeds to Step S40.

In Step S40, the setting unit 15 determines whether or not the moving times count value is 1, i.e., the second move of the selection image has been performed since the user touched the input operation unit 22. If the setting unit 15 determines that the moving times count value is 1, i.e., the second move of the selection image has not been performed, the processing proceeds to Step S60. On the other hand, if the setting unit 15 determines that the moving times count value is larger than 1, i.e., the second move of the selection image has been performed, the processing proceeds to Step S70.

In Step S50, the setting unit 15 sets the operation amount threshold (distance threshold) to the first value a. In Step S60, the setting unit 15 sets the operation amount threshold (distance threshold) to the second value b. In Step S70, the setting unit 15 sets the operation amount threshold (distance threshold) to the third value c.

Based on the input operation information, the determination unit 14 determines whether or not the accumulated value of the input operation amount has exceeded the operation amount threshold in Step S80. Specifically, the determination unit 14 determines whether the input operation direction corresponds to the positive direction or the negative direction of the x axis.

If the determination unit 14 determines that the input operation direction corresponds to the positive direction of the x axis, a count value corresponding to the input operation amount is accumulated to the +x operation amount count value and the -x operation amount count value is reset. If the determination unit 14 determines that the input operation direction corresponds to the negative direction of the x axis, the determination unit 14 accumulates a count value corresponding to the input operation amount to the -x operation amount count value and resets the +x operation amount count value. In this way, the determination unit 14 calculates an accumulated value of the input operation amount. Furthermore the determination unit 14 may increase an accumulation pace of the accumulated value (count value increment per unit of operation amount) as a speed of input operation (moving speed of finger) increases.

Then, the determination unit 14 determines whether or not the operation amount count value corresponding to the input operation direction, i.e., the accumulated value of the input operation amount has exceeded the operation amount threshold. If the determination unit 14 determines that the operation amount count value corresponding to the input operation direction has exceeded the operation amount threshold, the processing proceeds to Step S90. If the determination unit 14 determines that the operation amount count value is equal to or smaller than the operation amount threshold, this processing is terminated.

In Step S90, the determination unit 14 outputs, to the control unit 16, determination result information indicating that the operation amount count value has exceeded the operation amount threshold. The control unit 16 outputs, to the display unit 13, moving instruction information that instructs the display unit 13 to move the selection image by only one frame in a direction corresponding to the operation amount count value. In response to this, the display unit 13 moves the selection image by only one frame in the direction corresponding to the operation amount count value. Further, the control unit 16 increases the value of the moving times counter by one. Thereafter, the information processing apparatus 10 proceeds to Step S100.

In Step S100, the determination unit 14 resets the operation amount count value that has exceeded the operation amount threshold. Thereafter, the information processing apparatus 10 terminates this processing.

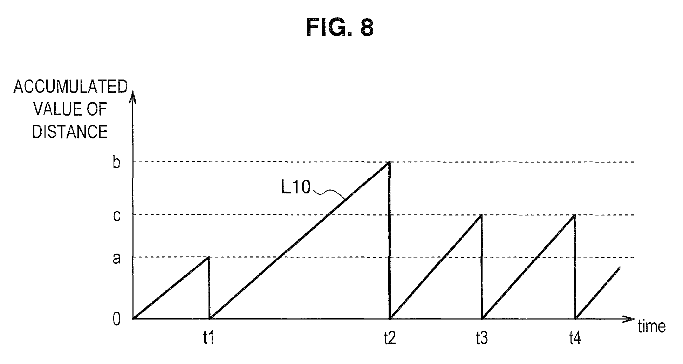

How each count value and the operation amount threshold are changed will be described with reference to FIG. 8. A horizontal axis of FIG. 8 indicates time (point of time) and a vertical axis thereof indicates a +x axis operation amount count value. A graph L10 shows an operation amount count value at each time. Inclination of the graph L10 indicates a moving speed of the finger.

At a time 0, the user touches the input operation unit 22 by his/her finger. Thereafter, the user moves his/her finger in a direction corresponding to the +x axis (e.g., arrow Q direction shown in FIG. 7). On the other hand, the setting unit 15 sets the operation amount threshold to the first value a, and the determination unit 14 accumulates the +x operation amount count value in accordance with move of the finger of the user.

At a time t1, the +x operation amount count value exceeds the first value a. In response to this, the determination unit 14 notifies the control unit 16 that the +x operation amount count value has exceeded the first value a. Further, the determination unit 14 resets the +x operation amount count value to zero. The control unit 16 moves the selection image by one frame in the positive direction of the x axis and increases the value of the moving times counter by one. Thereafter, the setting unit 15 sets the operation amount threshold to the second value b.

At a time t2, the +x operation amount count value exceeds the second value b. In response to this, the determination unit 14 notifies the control unit 16 that the +x operation amount count value has exceeded the second value b. Further, the determination unit 14 resets the +x operation amount count value to zero. The control unit 16 moves the selection image by one frame in the positive direction of the x axis and increases the value of the moving times counter by one. Thereafter, the setting unit 15 sets the operation amount threshold to the third value c.

At the time t3, the +x operation amount count value exceeds the third value c. In response to this, the determination unit 14 notifies the control unit 16 that the +x operation amount count value has exceeded the third value c. Further, the determination unit 14 resets the +x operation amount count value to zero. The control unit 16 moves the selection image by one frame in the positive direction of the x axis and increases the value of the moving times counter by one. Furthermore the setting unit 15 maintains the operation amount threshold to the third value c.

At a time t4, the +x operation amount count value exceeds the third value c. In response to this, the determination unit 14 notifies the control unit 16 that the +x operation amount count value has exceeded the third value c. Further, the determination unit 14 resets the +x operation amount count value to zero. The control unit 16 moves the selection image by one frame in the positive direction of the x axis and increases the value of the moving times counter by one. Furthermore the setting unit 15 maintains the operation amount threshold to the third value c. As described above, the operation amount threshold is maintained to the third value c at the time t2 and thereafter.

### (2-6. Modification example)

### (2-6-1. Modification example of processing)

A modification example of the processing will be described as a modification example of Embodiment 1. This modification example is an example where hold processing (hold function) is added to Embodiment 1. The hold processing is processing for continuously moving a selection image if a user stops his/her finger while touching the input operation unit 22 by the finger.

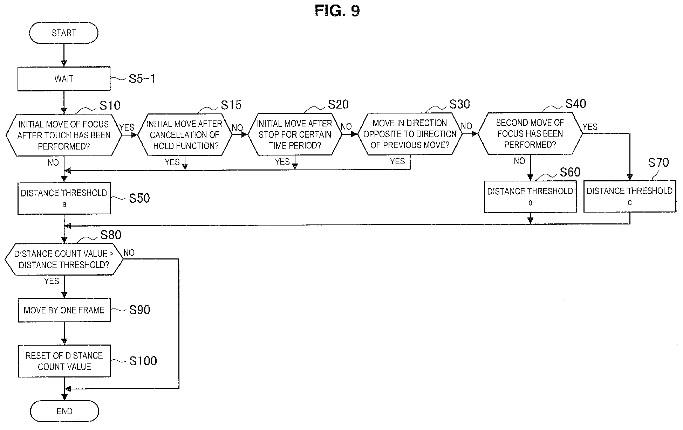

Procedures of the processing of this modification example will be described with reference to a flowchart shown in FIG. 9. Herein, processing similar to that in Embodiment 1 is denoted by the same step numbers, and description of the processing is omitted.

In Step S5-1, the information processing apparatus 10 waits until the information processing apparatus 10 receives input operation information. On the other hand, a user performs input operation with the use of the input operation unit 22 of the input operation device 20. In response to this, the input operation unit 22 generates input operation information and outputs the input operation information to the control unit 24. The control unit 24 outputs the input operation information to the communication unit 23, and the communication unit 23 transmits the input operation information to the information processing apparatus 10.

The communication unit 12 of the information processing apparatus 10 receives the input operation information and outputs the input operation information to the control unit 16. Based on the input operation information, the control unit 16 determines whether or not the user continues input operation (i.e., whether or not the user touches the input operation unit 22 by his/her finger). If the control unit 16 determines that the user has terminated the input operation, the control unit 16 resets all count values, and this processing is terminated. If the control unit 16 determines that the user continues the input operation, the control unit 16 determines whether or not the processing proceeds to the hold processing.

Specifically, the control unit 16 determines whether or not the value of the moving times counter is two or more (i.e., the selection image is moved two or more times) and whether or not the user stops his/her finger while touching the input operation unit 22 by the finger. If the above condition is satisfied, the control unit 16 terminates this processing and proceeds to the hold processing. If the above condition is not satisfied, the control unit 16 proceeds to Step S10.

If the processing proceeds to the hold processing, the control unit 16 outputs, to the display unit 13, the same moving instruction information as the moving instruction information that has been generated (issued) so far at the same pace as a pace at which the moving instruction information has been generated so far (the number of generation per unit time). The display unit 13 performs processing in accordance with the moving instruction information, i.e., moves the selection image every time when the moving instruction information is supplied. In this way, the hold processing is performed. The control unit 16 constantly acquires the input operation information even during the hold processing and determines whether or not the finger of the user has moved. If the control unit 16 determines that the finger of the user has moved, the processing proceeds to Step S10.

In Step S15, the setting unit 15 determines whether or not the input operation information from the control unit 16 is information that has been supplied for the first time since the hold processing was performed. If the setting unit 15 determines that the input operation information from the control unit 16 is information that has been supplied for the first time since the hold processing was performed, the processing proceeds to Step S50. If the setting unit 15 determines that the input operation information from the control unit 16 is not information that has been supplied for the first time since the hold processing was performed, the processing proceeds to Step S20. Therefore, in this modification example, if the user moves his/her finger after the hold processing, the operation amount threshold is set to the first value a. The reason why such processing is performed is as follows. Specifically, in some cases, the user roughly moves the selection image in the hold processing and then moves the selection image by one frame at each time. Therefore, it is necessary to easily move the selection image after the hold processing. In view of this, in this modification example, if the user moves his/her finger after the hold processing, the operation amount threshold is set to the first value a. With this, the user can easily move the selection image after the hold processing.

### (2-6-2. Modification example of configuration)

In Embodiment 1 and the modification example described above, display and display control of a selection image and object images and processing for receiving input operation from a user are performed by different devices. However, for example, display and display control of a selection image and object images and processing for receiving input operation from a user may be performed by the same device. Examples of such a device encompasses a notebook personal computer on which a touchpad is mounted and devices (e.g., smartphone and smart tablet) in which a touchpad (touchscreen) is mounted on a surface of a display. Furthermore this embodiment is suitable for a device in which a touchpad exists in a region other than a surface of a display. This is because, in such a device, it is difficult in many cases to separate operation for moving a selection image by only one frame from operation for moving a selection image for a plurality of frames.

Further, display and display control of a selection image and object images may be performed by different devices. Such an example is a system including a display device and a game console (or personal computer). An input operation device may be mounted on the game console or the personal computer or may be externally provided thereto.

The input operation device 20 may have functions performed by the information processing apparatus 10, i.e., specifically, functions performed by the determination unit 14, the setting unit 15, and the control unit 16. In this case, the input operation device 20 transmits moving instruction information to the information processing apparatus 10, and the information processing apparatus 10 moves a selection image on the basis of the moving instruction information. The modification example of the configuration and the modification example of the processing can be arbitrarily combined. For example, display and display control of a selection image and object images and processing for receiving input operation from a user may be performed by the same device and hold processing may be performed.

From the above, according to Embodiment 1, the information processing apparatus 10 sets the operation amount threshold to the first value a before the first move of the selection image is performed and sets the operation amount threshold to the second value b larger than the first value a after the first move of the selection image is performed. With this, the information processing apparatus 10 can comfortably perform both operation for moving a selection image by only one frame and operation for moving a selection image for a plurality of frames. That is, the information processing apparatus 10 can improve operability for selecting an object image.

If the input operation amount exceeds the operation amount threshold, the information processing apparatus 10 resets (an accumulated value of) the input operation amount. Therefore, the information processing apparatus 10 can comfortably perform both operation for moving a selection image by only one frame and operation for moving a selection image for a plurality of frames.

After the second move of the selection image is performed, the information processing apparatus 10 sets the operation amount threshold to the third value c smaller than the second value b. Therefore, the information processing apparatus 10 further comfortably performs both operation for moving a selection image by only one frame and operation for moving a selection image for a plurality of frames.

The information processing apparatus 10 sets the third value c to a value between the first value a and the second value b. Therefore, the information processing apparatus 10 can further comfortably perform both operation for moving a selection image by only one frame and operation for moving a selection image for a plurality of frames.

If the selection image is moved one or more times and then the input operation direction is inverted, the information processing apparatus 10 sets the operation amount threshold to the fourth value d smaller than the second value b. Therefore, if overshoot occurs, a user can easily return the selection image to a desired object image.

The information processing apparatus 10 causes the fourth value d to correspond to the first value a. Therefore, if overshoot occurs, the user can easily return a selection image to a desired object image.

The information processing apparatus 10 sets the operation amount threshold on the basis of object images. Therefore, it is further comfortably possible to perform both operation for moving a selection image by only one frame and operation for moving a selection image for a plurality of frames.

The information processing apparatus 10 sets the operation amount threshold on the basis of size of the object images. Therefore, it is possible to further comfortably perform both operation for moving a selection image by only one frame and operation for moving a selection image for a plurality of frames.

The information processing apparatus 10 determines the third value c on the basis of the size of the object images. Therefore, it is possible to further comfortably perform both operation for moving a selection image by only one frame and operation for moving a selection image for a plurality of frames.

The information processing apparatus 10 accumulates a count value of the input operation amount on the basis of a speed of input operation. Therefore, it is possible to further comfortably perform both operation for moving a selection image by only one frame and operation for moving a selection image for a plurality of frames.

### <3. Embodiment 2>

### (3-1. Overall configuration)

An overall configuration of Embodiment 2 will be described. The overall configuration of Embodiment 2 is similar to that of Embodiment 1. That is, also in Embodiment 2, the information processing system includes the information processing apparatus 10 and the input operation device 20. The modification example of the configuration described above is also applicable to Embodiment 2.

### (3-2. Outline of processing)

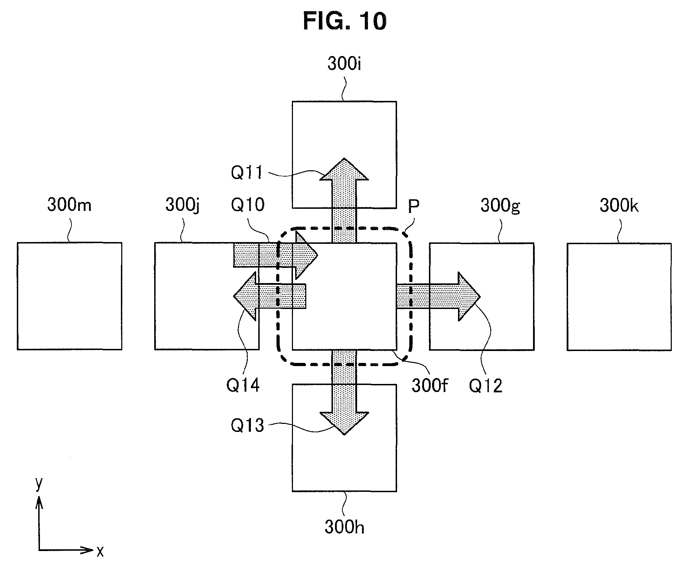

Processing of Embodiment 2 is substantially the same as that of Embodiment 1 other than the following point. That is, in Embodiment 2, the information processing apparatus 10 two-dimensionally displays a plurality of object images and overlaps a selection image on any of the object images. FIG. 10 shows a display example. In FIG. 10, object images 300f to 300m and a selection image P are displayed. The x axis and the y axis are set in the display unit 13, and the object images 300f to 300m are two-dimensionally arranged. The selection image P overlaps the object 300f. In this example, the selection image P is moved from the object image 300j in an arrow Q10 direction to overlap the object image 300f. Further, this move is first move after a user touches the input operation unit 22 by his/her finger. The selection image P is movable in arrow Q11 to Q14 directions. However, if the selection image is moved in the arrow Q14 direction, an operation amount threshold is set to the first value a. Operation amount threshold values in the other directions are set to the second value b. Lengths of the arrows Q11 to Q14 indicate respective magnitudes of the operation amount thresholds corresponding to the directions.

That is, in Embodiment 2, the above operation amount counters are prepared for respective all the xy directions, i.e., for the ±x directions and the ±y directions. Further, the operation amount threshold is prepared for each operation amount count value. The operation amount thresholds corresponding to the operation amount count values are basically common. However, if the input operation direction is inverted, an operation amount threshold corresponding to the operation direction after inversion is a preferentially set to a small value, i.e., the first value a.

### (3-3. Processing steps using information processing apparatus>

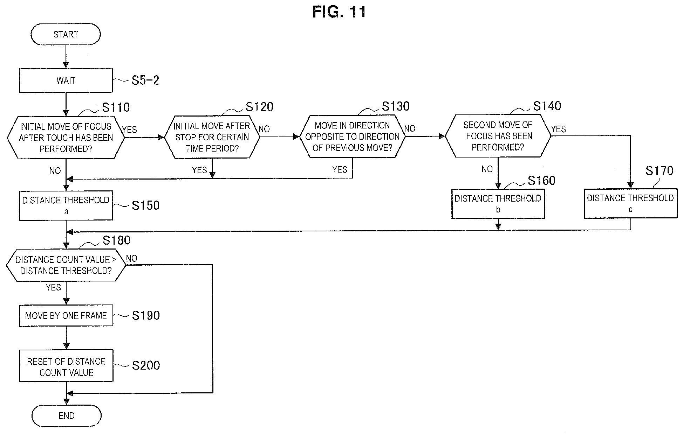

Processing steps using the information processing apparatus (information processing system) will be described with reference to a flowchart of FIG. 11. As a presupposition of this processing, the control unit 16 two-dimensionally displays object images on the display unit 13 and overlaps a selection image on any of the object images. The control unit 16 prepares the moving times counter. The determination unit 14 prepares the +x operation amount counter, the -x operation amount counter, the +y operation amount counter, and the -y operation amount counter. Those counters are formed in, for example, the RAM 102. An initial value of each counter is 0.

In Step S5-2, the information processing system performs processing similar to Step S5 described above.

In Step S110, the control unit 16 outputs input operation information to the determination unit 14 and the setting unit 15.

The setting unit 15 determines whether or not the value of the moving times counter is 0, i.e., whether or not the first move (initial move) of the selection image has been performed since a user touched the input operation unit 22. If the setting unit 15 determines that the value of the moving times counter is 0, i.e., determines that the first move (initial move) of the selection image has not been performed, the processing proceeds to Step S150. If the setting unit 15 determines that the value of the moving times counter is larger than 0, i.e., determines that the first move (initial move) of the selection image has been performed, the processing proceeds to Step S120.

Furthermore, as described below, the moving times counter increases when the selection image is moved in the same direction. However, if the selection image is moved in a certain direction (e.g., +x direction) and is then moved in another direction (e.g., +y direction), the moving times counter is reset. Therefore, also if the selection image is moved in a certain direction (e.g., +x direction) and is then moved in another direction (e.g., +y direction), the setting unit 15 proceeds to Step S150.

Based on the input operation information, the setting unit 15 determines whether or not the user has stopped his/her finger for a certain time period and has started to move the finger in Step S120. If the setting unit 15 determines that the user has stopped his/her finger for a certain time period and has started to move the finger, the processing proceeds to Step S150. In the other cases, the processing proceeds to Step S130.

Based on the input operation information, the setting unit 15 determines whether or not the input operation direction has been inverted in Step S130. That is, the setting unit 15 determines whether or not positive/negative of a current input operation direction has been inverted from positive/negative of a previous input operation direction. If the setting unit 15 determines that the input operation direction has been inverted, the setting unit 15 resets the moving times counter, and the processing proceeds to Step S150. In the other cases, the processing proceeds to Step S140. Furthermore the setting unit 15 determines whether or not positive/negative of each of the xy axes has been inverted, and, if positive/negative of both the axes has been inverted, the setting unit 15 determines that the input operation direction has been inverted. Furthermore the setting unit 15 determines that the input operation direction has been inverted also if positive/negative of one of the xy axes has been determined and the input operation amount of the other one thereof is 0.

In Step S140, the setting unit 15 determines whether or not the moving times count value is 1, i.e., determines whether or not second move of the selection image has been performed in the same direction since the user touched the input operation unit 22. If the setting unit 15 determines that the moving times count value is 1, i.e., the second move of the selection image has not been performed in the same direction, the processing proceeds to Step S160. On the contrary, if the setting unit 15 determines that the moving times count value is larger than 1, i.e., the second move of the selected has been performed in the same direction, the processing proceeds to Step S170.

In Step S150, the setting unit 15 sets the operation amount thresholds (distance thresholds) corresponding to all the operation amount count values to the first value a. However, if the processing proceeds to this step from Step S130, the setting unit 15 sets the operation amount threshold (distance threshold) corresponding to the operation amount count value after inversion to the first value a and maintains the operation amount thresholds corresponding to other operation amount count values to current values.

In Step S160, the setting unit 15 sets the operation amount thresholds (distance thresholds) corresponding to all the operation amount count values to the second value b. In Step S170, the setting unit 15 sets the operation amount thresholds (distance thresholds) for all the operation amount count values to the third value c.

Based on the input operation information, the determination unit 14 determines whether or not an accumulated value of the input operation amount has exceeded the operation amount threshold in Step S180. Specifically, the determination unit 14 determines to which one of the ±x-axis directions and the ±y-axis directions the input operation direction corresponds.

The determination unit 14 accumulates a count value corresponding to the input operation amount to an operation amount count value corresponding to the input operation direction and resets an operation amount count value in a direction opposite to the input operation direction. In this way, the determination unit 14 calculates the accumulated value of the input operation amount.

Then, the determination unit 14 determines whether or not the operation amount count value corresponding to the input operation direction, i.e., the accumulated value of the input operation amount has exceeded the operation amount threshold. If the determination unit 14 determines that the operation amount count value corresponding to the input operation direction has exceeded the operation amount threshold, the processing proceeds to Step S190. If the determination unit 14 determines that the operation amount count value is equal to or smaller than the operation amount threshold, this processing is terminated.

In Step S190, the determination unit 14 outputs, to the control unit 16, determination result information indicating that the operation amount count value has exceeded the operation amount threshold. The control unit 16 outputs, to the display unit 13, moving instruction information that instructs the display unit 13 to move the selection image by only one frame in a direction corresponding to the operation amount count value. In response to this, the display unit 13 moves the selection image by only one frame in the direction corresponding to the operation amount count value. Furthermore, if both the operation amount count value in the x-axis direction and the operation amount count value in the y-axis direction exceed the operation amount thresholds, the control unit 16 moves the selection image both in the x-axis direction and the y-axis direction. If the previous moving direction and the current moving direction of the selection image are the same, the control unit 16 increases the value of the moving times counter by one. Herein, "the same" means that, for example, the previous moving direction is equal to the current moving direction in terms of both the x-axis direction and the y-axis direction. If the previous moving direction and the current moving direction of the selection image are different, the control unit 16 resets the moving times counter. Therefore, if the user changes the moving direction of the selection image for each frame, the operation amount threshold is always set to be the first value a.

In Step S200, the determination unit 14 resets the operation amount count value that has exceeded the operation amount threshold. Herein, the determination unit 14 may reset the operation amount count values in a direction orthogonal to a direction of the reset operation amount count value (e.g., may reset ±y operation amount count values if the +x operation amount count value is reset) or may maintain the operation amount count value. In the former case, move of the selection image in a direction orthogonal to a current moving direction is restricted. In the latter case, the selection image can be moved in a direction of a smaller one of an angle with the x axis and an angle with the y axis. Thereafter, the information processing apparatus 10 terminates this processing.

### (3-4. Modification example)

### (3-4-1. First modification example)

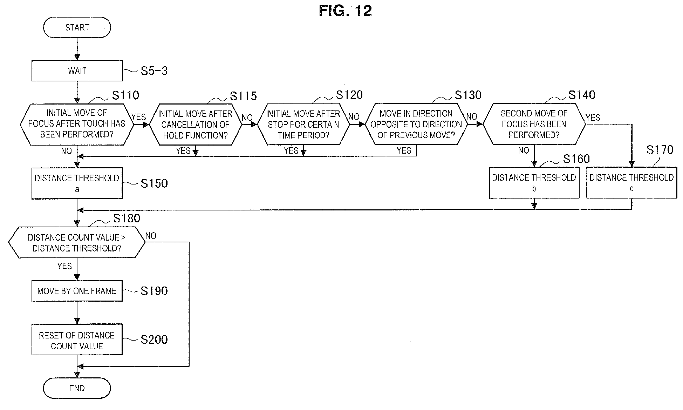

A first modification example of Embodiment 2 will be described. The first modification example is an example where hold processing is added to Embodiment 2, as in the modification example of Embodiment 1. Processing of the first modification example is performed in accordance with a flowchart of FIG. 12. As shown in FIG. 12, the processing of the first modification example is an example where Step S5-3 is provided instead of Step S5-2 in the processing of Embodiment 2 and processing of Step S115 is added. The processing of Steps S5-3 and S115 are similar to Steps S5-1 and S15, respectively, shown in FIG. 9. According to the first modification example, it is easy to move a selection image after the hold processing.

### (3-4-2. Second modification example)

A second modification example is different from Embodiment 2 in a method of setting an operation amount threshold. That is, in Embodiment 2, operation amount thresholds for all operation amount count values are set to be a common value. On the contrary, in the second modification example, if first move of a selection image is performed, the setting unit 15 sets the operation amount thresholds for all the operation amount count values to a common value (= first value a). Then, after the selection image is moved one or more times, the setting unit 15 controls only the operation amount threshold in the same direction as a previous moving direction of the selection image in a similar manner as Embodiment 2 and maintains the operation amount thresholds in the other directions to the second value b. In this way, the moving direction of the selection image is restricted. The second modification example can reduce a possibility that, if a user moves the selection image in, for example, the +x-axis direction, the user unintentionally moves the selection image in the ±y-axis directions. Whether to apply the second modification example may be selected by the user or may be automatically selected on the basis of an application or the like.

### (3-4-3. Third modification example)

In a third modification example, if any of operation amount count values exceeds an operation amount threshold, the determination unit 14 adjusts the operation amount thresholds in a direction orthogonal to a direction of the operation amount count value (e.g., adjusts the operation amount threshold to a smaller value). For example, if the +x operation amount count value has exceeded the operation amount threshold, the determination unit 14 reduces the operation amount thresholds in the ±y-axis directions so that the operation amount thresholds are smaller than a current value (e.g., approximately 0.8 time as large as the current value). Then, the determination unit 14 compares the adjusted operation amount thresholds with the operation amount count value corresponding to the operation amount threshold. Then, if the operation amount count values exceed the operation amount threshold, the determination unit 14 outputs, to the control unit 16, determination result information indicating that the operation amount count values have exceeded the operation amount thresholds. According to the third modification example, the selection image can be easily moved in an oblique direction. Whether to apply the third modification example may be selected by a user or may be automatically selected on the basis of an application or the like.

The first to third modification examples may be arbitrarily combined. For example, after the selection image is moved one or more times while the hold processing is being performed, only the operation amount threshold in the same direction as the previous moving direction of the selection image is controlled in a similar manner as Embodiment 2, and the operation amount thresholds in the other directions may be maintained to the second value b. Further, if any of the operation amount count values exceeds the operation amount threshold while the hold processing is being performed, the operation amount threshold in a direction orthogonal to a direction of the operation amount count value may be adjusted.

From the above, according to Embodiment 2 and each modification example, the information processing apparatus 10 sets the operation amount threshold for each input operation direction and sets the operation amount threshold corresponding to each direction to the first value a before the first move of the selection image is performed. Then, if the selection image is moved once in one of the directions, the information processing apparatus 10 sets the operation amount threshold corresponding to the one direction and the operation amount thresholds corresponding to the other directions to the second value. Therefore, even if object images are two-dimensionally displayed, the information processing apparatus 10 can comfortably perform both operation for moving a selection image by only one frame and operation for moving a selection image for a plurality of frames. That is, the information processing apparatus 10 can improve operability for selecting an object image.

If the selection image is moved twice in one direction, the information processing apparatus 10 sets the operation amount threshold corresponding to the one direction to the third value c smaller than the second value b and maintains the operation amount thresholds corresponding to the other directions to the second value b. Therefore, the information processing apparatus 10 can restrict move of the selection image in a direction that is not intended by a user while comfortably performing both operation for moving a selection image by only one frame and operation for moving a selection image for a plurality of frames.

If the selection image is moved twice in one direction, the information processing apparatus 10 sets the operation amount threshold corresponding to the one direction and the operation amount thresholds corresponding to the other directions to the third value c smaller than the second value. Therefore, the information processing apparatus 10 can comfortably perform both operation for moving a selection image by only one frame and operation for moving a selection image for a plurality of frames.

If the input operation amount in the one direction exceeds the operation amount threshold corresponding to the one direction, the information processing apparatus 10 reduces the operation amount thresholds corresponding to the other directions. Therefore, the information processing apparatus 10 can easily move the selection image in an oblique direction while comfortably performing both operation for moving a selection image by only one frame and operation for moving a selection image for a plurality of frames. Furthermore this embodiment may have any of the effects described in the present specification or another effect.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Additionally, the present technology may also be configured as below.
(1) An information processing apparatus, including:
   a determination unit configured to determine whether or not an input operation amount input to an input operation unit has exceeded an operation amount threshold;
   a control unit configured to set one of a plurality of object images displayed on a display unit as a selection target object image and change the selection target object image if the input operation amount has exceeded the operation amount threshold; and
   a setting unit configured to set the operation amount threshold to a first value before a first change in the selection target object image is performed and set the operation amount threshold to a second value larger than the first value after the first change in the selection target object image is performed.
(2) The information processing apparatus according to (1),
   wherein the determination unit resets the input operation amount if the input operation amount has exceeded the operation amount threshold.
(3) The information processing apparatus according to (1),
   wherein, after a second change in the selection target object image is performed, the setting unit sets the operation amount threshold to a third value smaller than the second value.
(4) The information processing apparatus according to (3),
   wherein the setting unit sets the third value to a value between the first value and the second value.
(5) The information processing apparatus according to any of (1) to (4),
   wherein the setting unit sets an operation amount threshold, obtained when an input operation direction is inverted after the selection target object image is changed one or more times, to a fourth value smaller than the second value.
(6) The information processing apparatus according to (5),
   wherein the setting unit causes the fourth value to correspond to the first value.
(7) The information processing apparatus according to any of (1) to (6),
   wherein the setting unit sets the operation amount threshold on the basis of the plurality of object images.
(8) The information processing apparatus according to (7),
   wherein the setting unit sets the operation amount threshold on the basis of size of the plurality of object images.
(9) The information processing apparatus according to (8),
   wherein, after a second change in the selection target object image is performed, the setting unit sets the operation amount threshold to a third value smaller than the second value and determines the third value on the basis of the size of the plurality of object images.
(10) The information processing apparatus according to any of (1) to (9),
   wherein the setting unit sets the operation amount threshold for each input operation direction, sets an operation amount threshold corresponding to each direction to the first value before the first change in the selection target object image is performed, and, if the selection target object image is changed one time to the object image in one of the directions, sets an operation amount threshold corresponding to the one direction and an operation amount threshold corresponding to another direction to the second value.
(11) The information processing apparatus according to (10),
   wherein, if the selection target object image is changed to the object image in the one direction twice, the setting unit sets the operation amount threshold corresponding to the one direction to a third value smaller than the second value and maintains the operation amount threshold corresponding to the another direction to the second value.
(12) The information processing apparatus according to (10) or (11),
   wherein, if the selection target object image is changed to the object image in the one direction twice, the setting unit sets the operation amount threshold corresponding to the one direction and the operation amount threshold corresponding to the another direction to a third value smaller than the second value.
(13) The information processing apparatus according to any of (10) to (12),
   wherein, if the input operation amount in the one direction has exceeded the operation amount threshold corresponding to the one direction, the setting unit reduces the operation amount threshold corresponding to the another direction.
(14) The information processing apparatus according to any of (1) to (13),
   wherein the determination unit accumulates a count value of the input operation amount on the basis of a speed of input operation, while determining whether or not the count value of the input operation amount has exceeded the operation amount threshold.
(15) An information processing method, including:
   determining whether or not an input operation amount input to an input operation unit has exceeded an operation amount threshold;
   setting one of a plurality of object images displayed on a display unit as a selection target object image and changing the selection target object image if the input operation amount has exceeded the operation amount threshold; and
   setting the operation amount threshold to a first value before a first change in the selection target object image is performed and setting the operation amount threshold to a second value larger than the first value after the first change in the selection target object image is performed.
(16) A program for causing a computer to realize:
   a determination function that determines whether or not an input operation amount input to an input operation unit has exceeded an operation amount threshold;
   a control function that sets one of a plurality of object images displayed on a display unit as a selection target object image and changes the selection target object image if the input operation amount has exceeded the operation amount threshold; and
   a setting function that sets the operation amount threshold to a first value before a first change in the selection target object image is performed and sets the operation amount threshold to a second value larger than the first value after the first change in the selection target object image is performed.

### Reference Signs List

10 information processing apparatus
11 storage unit
12 communication unit
13 display unit
14 determination unit
15 setting unit
16 control unit
20 input operation device
21 storage unit
22 input operation unit
23 communication unit
24 control unit
103 nonvolatile memory
104 communication device
105 display
203 nonvolatile memory
204 communication device
205 touchpad

## Claims

1. An information processing apparatus, comprising:
a determination unit configured to determine whether or not an input operation amount input to an input operation unit has exceeded an operation amount threshold;
a control unit configured to set one of a plurality of object images displayed on a display unit as a selection target object image and change the selection target object image if the input operation amount has exceeded the operation amount threshold; and
a setting unit configured to set the operation amount threshold to a first value before a first change in the selection target object image is performed and set the operation amount threshold to a second value larger than the first value after the first change in the selection target object image is performed.

2. The information processing apparatus according to claim 1,
wherein the determination unit resets the input operation amount if the input operation amount has exceeded the operation amount threshold.

3. The information processing apparatus according to claim 1,
wherein, after a second change in the selection target object image is performed, the setting unit sets the operation amount threshold to a third value smaller than the second value.

4. The information processing apparatus according to claim 3,
wherein the setting unit sets the third value to a value between the first value and the second value.

5. The information processing apparatus according to claim 1,
wherein the setting unit sets an operation amount threshold, obtained when an input operation direction is inverted after the selection target object image is changed one or more times, to a fourth value smaller than the second value.

6. The information processing apparatus according to claim 5,
wherein the setting unit causes the fourth value to correspond to the first value.

7. The information processing apparatus according to claim 1,
wherein the setting unit sets the operation amount threshold on the basis of the plurality of object images.

8. The information processing apparatus according to claim 7,
wherein the setting unit sets the operation amount threshold on the basis of size of the plurality of object images.

9. The information processing apparatus according to claim 8,
wherein, after a second change in the selection target object image is performed, the setting unit sets the operation amount threshold to a third value smaller than the second value and determines the third value on the basis of the size of the plurality of object images.

10. The information processing apparatus according to claim 1,
wherein the setting unit sets the operation amount threshold for each input operation direction, sets an operation amount threshold corresponding to each direction to the first value before the first change in the selection target object image is performed, and, if the selection target object image is changed one time to the object image in one of the directions, sets an operation amount threshold corresponding to the one direction and an operation amount threshold corresponding to another direction to the second value.

11. The information processing apparatus according to claim 10,
wherein, if the selection target object image is changed to the object image in the one direction twice, the setting unit sets the operation amount threshold corresponding to the one direction to a third value smaller than the second value and maintains the operation amount threshold corresponding to the another direction to the second value.

12. The information processing apparatus according to claim 10,
wherein, if the selection target object image is changed to the object image in the one direction twice, the setting unit sets the operation amount threshold corresponding to the one direction and the operation amount threshold corresponding to the another direction to a third value smaller than the second value.

13. The information processing apparatus according to claim 10,
wherein, if the input operation amount in the one direction has exceeded the operation amount threshold corresponding to the one direction, the setting unit reduces the operation amount threshold corresponding to the another direction.

14. The information processing apparatus according to claim 1,
wherein the determination unit accumulates a count value of the input operation amount on the basis of a speed of input operation, while determining whether or not the count value of the input operation amount has exceeded the operation amount threshold.

15. An information processing method, comprising:
determining whether or not an input operation amount input to an input operation unit has exceeded an operation amount threshold;
setting one of a plurality of object images displayed on a display unit as a selection target object image and changing the selection target object image if the input operation amount has exceeded the operation amount threshold; and
setting the operation amount threshold to a first value before a first change in the selection target object image is performed and setting the operation amount threshold to a second value larger than the first value after the first change in the selection target object image is performed.

16. A program for causing a computer to realize:
a determination function that determines whether or not an input operation amount input to an input operation unit has exceeded an operation amount threshold;
a control function that sets one of a plurality of object images displayed on a display unit as a selection target object image and changes the selection target object image if the input operation amount has exceeded the operation amount threshold; and
a setting function that sets the operation amount threshold to a first value before a first change in the selection target object image is performed and sets the operation amount threshold to a second value larger than the first value after the first change in the selection target object image is performed.
